(19) Europäisches Patentamt
European Patent Office
Office européen des brevets

(11) **EP 4 485 792 A1**

(12) **EUROPEAN PATENT APPLICATION**
published in accordance with Art. 153(4) EPC

(43) Date of publication:
**01.01.2025 Bulletin 2025/01**

(21) Application number: **22928956.6**

(22) Date of filing: **21.12.2022**

(51) International Patent Classification (IPC):
**H02P 6/16** (2016.01) **B25B 23/14** (2006.01)

(52) Cooperative Patent Classification (CPC):
**B25B 23/14; H02P 6/16; H02P 25/024**

(86) International application number:
**PCT/JP2022/047077**

(87) International publication number:
**WO 2023/162439 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.02.2022 JP 2022028610**

(71) Applicant: **Panasonic Holdings Corporation
Osaka 571-8501 (JP)**

(72) Inventor: **TSUJIMOTO, Naoki
Kadoma-shi, Osaka 571-0057 (JP)**

(74) Representative: **Müller-Boré & Partner
Patentanwälte PartG mbB
Friedenheimer Brücke 21
80639 München (DE)**

(54) **ELECTRIC TOOL**

(57)     An object of the present disclosure is to provide an electric tool configured to accurately calculate a value of tightening torque generated at a tip tool. An electric tool (1) includes: a motor (2); a transmission mechanism (4) configured to transmit rotation of the motor (2) to a holder (3) holding a tip tool (31); and a motor controller (5) configured to stop the rotation of the motor (2). The motor (2) includes: a rotor (21) configured to be rotatable and including a magnet; and a plurality of magnetic sensors (24) configured to detect an angle of rotation of the rotor (21). A number of the plurality of magnetic sensors (24) is greater than a number of phases of a coil (23). The motor controller (5) includes: a torque detector (51) configured to detect a value of motor torque transmitted from the motor (2) to the holder (3); and a stop controller (52) configured to control, based on a motor torque value, the motor (2) such that the rotation of the motor (2) stops. The electric tool (1) further includes a computing unit (6) configured to compute, based on a detection result by the plurality of magnetic sensors (24), an inertial force of at least one of the rotor (21) or the transmission mechanism (4) after the stop controller (52) starts the stop control.

FIG. 1

EP 4 485 792 A1

## Description

### Technical Field

The present disclosure generally relates to electric tools. The present disclosure specifically relates to an electric tool including a motor.

### Background Art

Patent Literature 1 discloses an electric power tool including a limiter that limits a current contributing to torque generation by a permanent magnet synchronous motor to a predetermined maximum current value based on predetermined target tightening torque.

The electric tool as described above stops the permanent magnet synchronous motor (motor), when a torque value detected by using the current contributing to the torque generation by the permanent magnet synchronous motor reaches a predetermined target tightening torque value, to control a tightening torque value. However, there is the problem that the permanent magnet synchronous motor cannot be stopped in an instant, and therefore, the value of tightening torque actually generated at a tip may exceed the target tightening torque value. That is, there is the problem that the value of the tightening torque actually generated at the tip tool cannot accurately be calculated.

### Citation List

### Patent Literature

Patent Literature 1: WO 2018/230140 A1

### Summary of Invention

It is an object of the present disclosure to provide an electric tool configured to accurately calculate the value of tightening torque actually generated at a tip tool.

An electric tool according to an aspect of the present disclosure includes a motor, a holder, a transmission mechanism, and a motor controller. The motor is configured to perform rotation operation. The holder is configured to hold a tip tool. The transmission mechanism is configured to transmit rotation of the motor to the holder. The motor controller is configured to stop the rotation of the motor. The motor includes a rotor, a stator, a coil, and a plurality of magnetic sensors. The rotor is configured to be rotatable and includes a magnet. The stator is disposed around the rotor. The coil is wound around the stator. The plurality of magnetic sensors are configured to detect an angle of rotation of the rotor. A number of the plurality of magnetic sensors is greater than a number of phases of the coil. The motor controller includes a torque detector and a stop controller. The torque detector is configured to detect a motor torque value which is a value of torque transmitted from the motor to the holder. The stop controller is configured to perform, based on the motor torque value, stop control of controlling the motor such that the rotation of the motor stops. The electric tool further includes a computing unit configured to compute, based on a detection result by the plurality of magnetic sensors, an inertial force of at least one of the rotor or the transmission mechanism after the stop controller starts the stop control.

### Brief Description of Drawings

FIG. 1 is a block diagram of a schematic configuration of an electric tool system according to an embodiment;
FIG. 2 is a schematic diagram of a mechanical structure of a motor included in the electric tool;
FIG. 3 is an illustrative view of detection signals output from a plurality of magnetic sensors in the electric tool;
FIG. 4 is an illustrative view of locations where the plurality of magnetic sensors are mounted on the electric tool;
FIG. 5 is an illustrative view of a method for calculating an angular velocity of a rotor by an angular velocity calculator in the electric tool;
FIG. 6 is a view of a time rate of change in a rotation speed of the rotor after a stop controller starts stop control in the electric tool; and
FIG. 7 is a view of a calculation limit of an inertial torque value calculated by an inertial torque calculator in the electric tool.

**Description of Embodiments**

(Embodiment)

(1) Overview

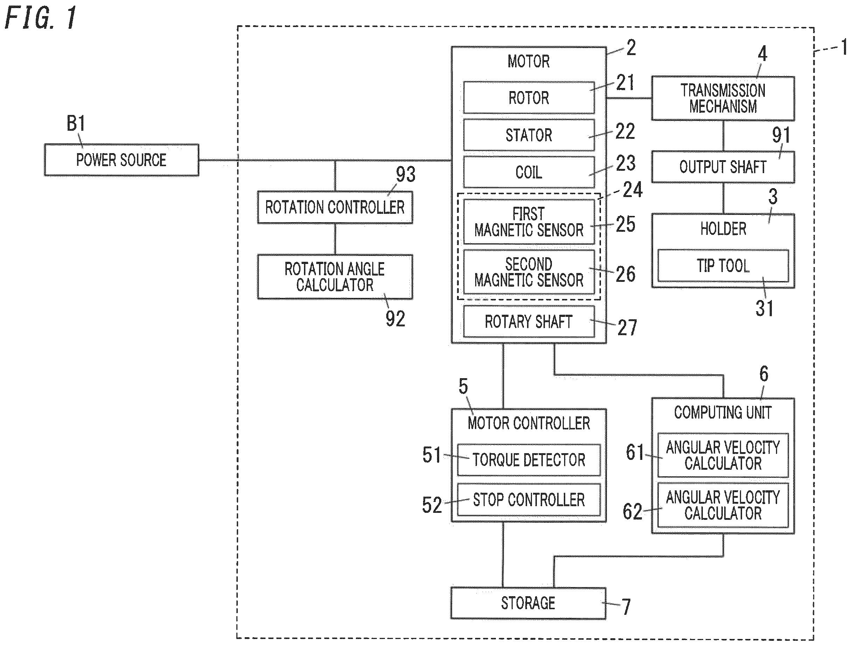

With reference to FIG. 1, an overview of an electric tool 1 according to an embodiment will be described below.

As shown in FIG. 1, the electric tool 1 according to the present embodiment includes a motor 2, a holder 3, a transmission mechanism 4, a motor controller 5, and a computing unit 6. In the present embodiment, the electric tool 1 is, for example, an impact driver which is operated by drive power (e.g., electric power) from a drive source such as a power source B1. Note that in the present embodiment, the electric tool 1 is assumed to be used by a worker in a tightening task of tightening a tightening component (e.g., a screw, a bolt, or a nut) to a tightening target (e.g., an electric product or furniture). Moreover, the electric tool 1 may be used by the worker in a removal task of loosening the tightening component from the tightening target.

The motor 2 performs rotation operation. The holder 3 holds a tip tool 31. The transmission mechanism 4 transmits rotation of the motor 2 to the holder 3. The motor controller 5 stops the rotation of the motor 2.

The motor 2 includes a rotor 21, a stator 22, a coil 23, and a plurality of magnetic sensors 24. The rotor 21 is configured to be rotatable and includes a magnet. The stator 22 is disposed around the rotor 21. The coil 23 is wound around the stator 22. The plurality of magnetic sensors 24 detect the angle of rotation of the rotor 21. The number of the plurality of magnetic sensors 24 is greater than the number of phases of the coil 23.

The motor controller 5 includes a torque detector 51 and a stop controller 52. The torque detector 51 detects a motor torque value which is the value of torque transmitted from the motor 2 to the holder 3. The stop controller 52 performs, based on the motor torque value, stop control of controlling the motor 2 such that the rotation of the motor 2 stops.

The computing unit 6 computes, based on a detection result by the plurality of magnetic sensors 24, an inertial force of at least one of the rotor 21 or the transmission mechanism 4 after the stop controller 52 starts the stop control.

Thus, the electric tool 1 of the present embodiment can accurately calculate an inertial torque value Ti (see formula 4) which is the value of torque generated at the tightening component by the inertial force of at least one of the rotor 21 or the transmission mechanism 4 after the stop controller 52 starts the stop control until the motor 2 stops. That is, the electric tool 1 of the present embodiment provides the advantage that the value of tightening torque actually generated at the tip tool 31 can accurately be calculated. The "value of tightening torque" as used in the present disclosure is the sum of the motor torque value and the inertial torque value Ti.

(2) Detailed Configuration

(2-1) Overall Configuration

With reference to FIGS. 1 to 7, the configuration of the electric tool 1 of the present embodiment will be described in detail below.

As shown in FIG. 1, the electric tool 1 includes the motor 2, the holder 3, the transmission mechanism 4, the motor controller 5, the computing unit 6, a storage 7, an output shaft 91, a rotation angle calculator 92, and a rotation controller 93.

In the present embodiment described below, a content of the tightening task of the electric tool 1 is assumed to be a hard joint. The hard joint is a tightening task of tightening a tightening component made of, for example, metal to a tightening target.

The electric tool 1 preferably includes a computer system. The computer system may include a processor and memory as principal hardware components thereof. The processor executes a program stored in the memory of the computer system, thereby implementing at least some of functions of the motor controller 5, the computing unit 6, the rotation angle calculator 92, and the rotation controller 93 of the present disclosure. The computer system includes, as a principal hardware component, a processor which operates in accordance with the program. The type of the processor is not particularly limited as long as the processor can implement the functions by executing the program. The processor may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation.

(2-2) Motor

The motor 2 performs rotation operation. More specifically, the motor 2 is driven by electric power supplied from a power source B1, thereby performing the rotation operation. As an example, the power source B1 is a rechargeable battery pack detachably attached to the electric tool 1. The power source B1 is not a component included in the electric tool 1. However, the power source B1 may include a battery pack as its component.

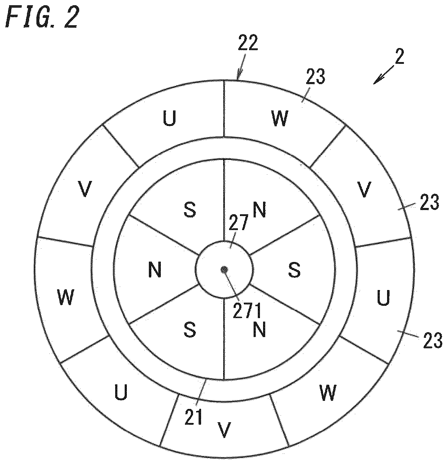

The motor 2 of the present embodiment is a brushless motor. More specifically, the motor 2 of the present embodiment is a three-phase (U-phase, V-phase, and W-phase) brushless motor. As shown in FIGS. 1 and 2, the motor 2 includes the rotor 21, the stator 22, the coil 23, the magnetic sensors 24, and a rotary shaft 27.

The rotor 21 is configured to be rotatable and includes a magnet. The magnet included in the rotor 21 is a permanent magnet. As shown in FIG. 2, the stator 22 is disposed around the rotor 21. The rotor 21 is configured to be rotatable, with respect to the stator 22, around a centerline 271 of the rotary shaft 27. The rotary shaft 27 is mechanically connected to the rotor 21 and rotates along with rotation of the rotor 21.

The coil 23 is wound around the stator 22. The coil 23 of the present embodiment has three phases (U phase, V phase, and W phase). That is, in the motor 2 of the present embodiment, the coil 23 having the three phases is wound around the stator 22 as shown in FIG. 2. An electric wire constituting the coil 23 is, for example, an enamel wire.

The electric power supplied from the power source B1 flows through the coil 23 having the three phases, thereby generating a magnetic flux. In the motor 2, the magnetic flux generated from the coil 23 having the three phases and wound around the stator 22 generates an electro magnetic force which rotates the rotor 21. The motor 2 transmits a rotational force of the rotor 21 from the rotary shaft 27 to the transmission mechanism 4.

The plurality of magnetic sensors 24 detect the angle of rotation of the rotor 21. More specifically, the plurality of magnetic sensors 24 detect the magnetic field generated by the magnet of the rotor 21 and output a detection result according to the angle of rotation of the rotor 21. As an example, the plurality of magnetic sensors 24 are Hall elements which use a Hall effect to detect the magnetic field generated by the magnet of the rotor 21.

The number of the plurality of magnetic sensors 24 is greater than the number of phases of the coil 23. In the present embodiment, the number of the plurality of magnetic sensors 24 is six. The plurality of magnetic sensors 24 include at least one first magnetic sensor 25 and at least one second magnetic sensor 26. The number of the at least one first magnetic sensor 25 is equal to the number of phases of the coil 23. The at least one second magnetic sensor 26 is different from the at least one first magnetic sensors 25. That is, the number of the second magnetic sensors 26 of the present embodiment is equal to the number of phases of the coil 23. In other words, the number of the second magnetic sensors 26 in the present embodiment is three. In sum, the electric tool 1 of the present embodiment includes three first magnetic sensors 25a, 25b, and 25c and three second magnetic sensors 26a, 26b, and 26c. In the present embodiment, the number of the second magnetic sensors 26 is equal to the number of phases of the coil 23, which provides the advantage that the second magnetic sensors 26 can be arranged to correspond to the respective phases of the coil 23.

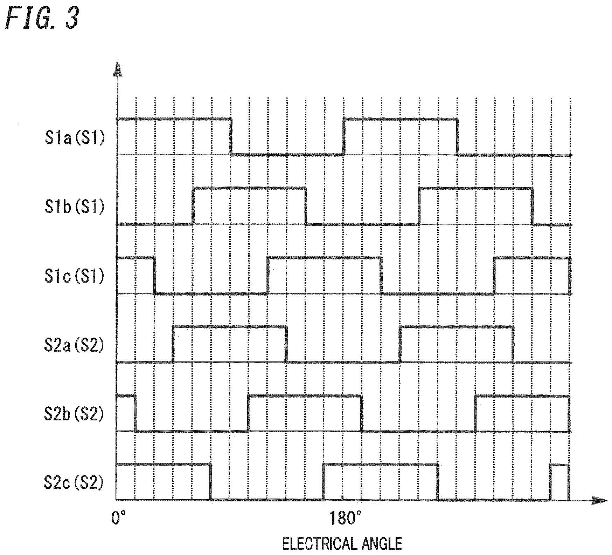

As shown in FIG. 3, the first magnetic sensors 25 output respective detection signals S1 as detection results. Similarly, the second magnetic sensors 26 output respective detection signals S2 as detection results. Each detection signal S1 is a signal which switches between a low level and a high level at a timing at which the polarity of the magnetic filed detected by a corresponding one of the first magnetic sensors 25 is changed by the rotation of the rotor 21. Each detection signal S2 is a signal which switches between the low level and the high level at a timing at which the polarity of the magnetic filed detected by a corresponding one of the second magnetic sensors 26 is changed by the rotation of the rotor 21. In the present embodiment, the first magnetic sensors 25a, 25b, and 25c respectively output detection signals S1a, S1b, and S1c which are the detection signals S1. Similarly, the second magnetic sensors 26a, 26b, and 26c respectively output detection signals S2a, S2b, and S2c which are the detection signals S2.

The first magnetic sensors 25a, 25b, and 25c are arranged such that the electrical angle between the detection signals S1a and S1b, between the detection signals S1b and S1c, and between the detection signals S1c and S1a is 30°. The second magnetic sensors 26a, 26b, and 26c are arranged such that the electrical angle between the detection signals S2a and S2b, between the detection signals S2b and S2c, and between the detection signals S2c and S2a is 30°. The "electrical angle" as used in the present disclosure is a phase difference between the detection signals S1a and S1b, between the detection signals S1b and S1c, between the detection signals S1c and S1a, between the detection signals S2a and S2b, between the detection signals S2b and S2c, and between the detection signals S2c and S2a. More specifically, the "electrical angle" as used in the present disclosure is a difference in terms of the timing of switching between the low level and the high level between the detection signals S1a and S1b, between the detection signals S1b and S1c, between the detection signals S1c and S1a, between the detection signals S2a and S2b, between the detection signals S2b and S2c, and between the detection signals S2c and S2a.

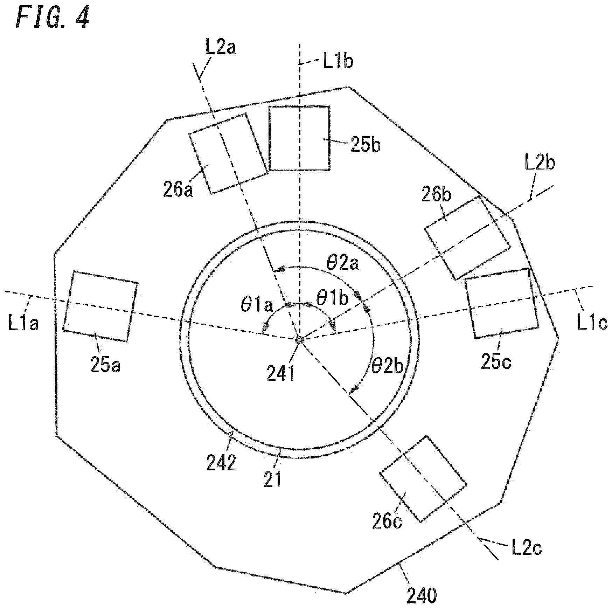

As an example, the first magnetic sensors 25a, 25b, and 25c and the second magnetic sensors 26a, 26b, and 26c are mounted on a sensor substrate 240 as shown in FIG. 4. The sensor substrate 240 has a through hole 242 through which the rotor 21 extends. The first magnetic sensors 25a, 25b, and 25c are arranged at predetermined intervals in an arc. In other words, the first magnetic sensors 25a, 25b, and 25c are arranged in an arc around a center point 241 of the sensor substrate 240 such that the first magnetic sensors 25a, 25b, and 25c are separated from one another by a predetermined angle. More specifically, an angle θ1a between a straight line L1a through the center of the first magnetic sensor 25a and the center point 241 of the sensor substrate 240 and a straight line L1b through the center of the first magnetic sensor 25b and the center point 241 of the sensor substrate 240 is equal to an angle θ1b between the straight line L1b and a straight line L1c through the center of the first magnetic sensor 25c and the center point 241 of the sensor substrate 240.

Similarly, the second magnetic sensors 26a, 26b, and 26c are arranged at predetermined intervals in an arc. In other words, the second magnetic sensors 26a, 26b, and 26c are arranged in an arc around the center point 241 of the sensor substrate 240 such that the second magnetic sensors 26a, 26b, and 26c are separated from one another by a predetermined angle. More specifically, an angle θ2a between a straight line L2a through the center of the second magnetic sensor 26a and the center point 241 of the sensor substrate 240 and a straight line L2b through the center of the second magnetic sensor 26b and the center point 241 of the sensor substrate 240 is equal to the angle θ2b between the straight line L2b and a straight line L2c through the center of the second magnetic sensor 26c and the center point 241 of the sensor substrate 240.

Moreover, the first magnetic sensors 25a, 25b, and 25c and the second magnetic sensors 26a, 26b, and 26c are alternately arranged in an arc.

In the present embodiment, the second magnetic sensor 26a is disposed between the first magnetic sensor 25a and the first magnetic sensor 25b. More specifically, between the first magnetic sensor 25a and the first magnetic sensor 25b, the second magnetic sensor 26a is disposed at a location closer to the first magnetic sensor 25b than to the first magnetic sensor 25a.

Similarly, the second magnetic sensor 26b is disposed between the first magnetic sensor 25b and the first magnetic sensor 25c. More specifically, between the first magnetic sensor 25b and the first magnetic sensor 25c, the second magnetic sensor 26b is disposed at a location closer to the first magnetic sensor 25c than to the first magnetic sensor 25b.

The detection results by the first magnetic sensors 25 are used to control the rotation of the motor 2 by the rotation controller 93 and to calculate the inertial force by the computing unit 6.

The detection results by the second magnetic sensors 26 of the present embodiment are used only to calculate the inertial force by the computing unit 6. In other words, the detection results by the second magnetic sensors 26 of the present embodiment are not used to control the rotation of the motor 2 by the rotation controller 93.

(2-3) Transmission Mechanism

To the transmission mechanism 4, the rotary shaft 27 of the motor 2 is mechanically connected. The transmission mechanism 4 reduces the rotational force of the rotor 21 at a predetermined reduction rate and transmits the rotational force thus reduced to the output shaft 91. To the output shaft 91, the holder 3 is mechanically connected. In other words, the transmission mechanism 4 transmits the rotation of the motor 2 to the holder 3.

(2-4) Holder

The holder 3 holds the tip tool 31. More specifically, the holder 3 is detachably provided with the tip tool 31. Alternatively, the tip tool 31 may be integrated with the holder 3. The tip tool 31 is, for example, a driver bit.

The holder 3 transmits the rotational force transmitted from the transmission mechanism 4 to the tip tool 31. Thus, when the rotary shaft 27 of the motor 2 rotates, the tip tool 31 rotates. The tip tool 31 rotates in a state where the tip tool 31 is in contact with a tightening component, which enables a task such as tightening or loosening the tightening component to be performed. In the present embodiment, the tip tool 31 is not included in components of the electric tool 1. However, the tip tool 31 may be included in the components of the electric tool 1.

(2-5) Rotation Controller

The rotation controller 93 switches electric power supplied to the motor 2 from the power source B1, thereby controlling the rotation of the motor 2. More specifically, the rotation controller 93 switches, based on the angle of rotation of the rotor 21 calculated by the rotation angle calculator 92 from the detection results by the first magnetic sensors 25, electric power supplied to the electric wire constituting the coil 23 having the three phases.

In the present embodiment, the rotation controller 93 controls, based on only the detection results by the first magnetic sensors 25, the rotation of the motor 2, which provides the advantage that a control content regarding the rotation of the motor 2 by the rotation controller 93 can be simplified.

(2-6) Motor Controller

The motor controller 5 stops the rotation of the motor 2. In the present embodiment, the motor controller 5 controls the motor 2 such that the rotation of the motor 2 stops. Specifically, the motor controller 5 of the present embodiment is an electronic clutch.

The motor controller 5 includes the torque detector 51 and the stop controller 52. The torque detector 51 detects the motor torque value which is the value of the torque transmitted from the motor 2 to the holder 3. The torque detector 51 of the present embodiment calculates the motor torque value on the basis of a motor current which is caused to flow through the motor 2 by the electric power supplied to the motor 2 from the power source B1. The "motor current" as used in the present disclosure corresponds to a torque current when the current flowing through the motor 2 is decomposed into the torque current which is a current component for generating torque and an excitation current which is a current component for generating a magnetic flux, and the current components are independently controlled (when the motor 2 is vector-controlled).

The stop controller 52 performs, based on the motor torque value detected by the torque detector 51, the stop control of controlling the motor 2 such that the rotation of the motor 2 stops. More specifically, the stop controller 52 starts the stop control when the motor torque value detected by the torque detector 51 reaches a set torque value which is preset. As the stop control, the stop controller 52 of the present embodiment stops the electric power supplied from the power source B1 to the motor 2.

(2-7) Computing Unit

The computing unit 6 computes, based on the detection results by the first magnetic sensors 25 and the second magnetic sensors 26, the inertial force of at least one of the rotor 21 or the transmission mechanism 4 after the stop controller 52 starts the stop control. As shown in FIG. 1, the computing unit 6 includes an angular velocity calculator 61 and an inertial torque calculator 62.

The angular velocity calculator 61 calculates, based on the detection result by the plurality of magnetic sensors 24, the angular velocity of the rotor 21. More specifically, the angular velocity calculator 61 calculates, based on the detection signals S1 and the detection signals S2 which are the detection results respectively by the first magnetic sensors 25 and the second magnetic sensors 26, the angular velocity of the rotor 21 after the stop controller 52 starts the stop control.

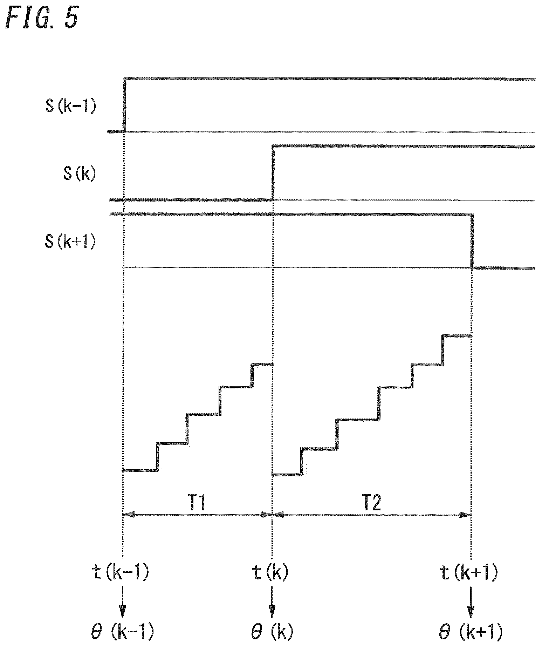

With reference to FIG. 5, a method for calculating the angular velocity of the rotor 21 by the angular velocity calculator 61 will be described below.

The angular velocity calculator 61 performs counting at a predetermined count interval Tc during a period from a timing at which one of the detection signals S1 and the detection signals S2 switches between the low level and the high level to a timing at which the one of the detection signals S1 and the detection signals S2 next switches between the low level and the high level.

As an example, description is specifically given with reference to FIG. 5. FIG. 5 shows a detection signal S(k-1), a detection signal S(k), and a detection signal S(k+1) which are the detection signals S1 of the first magnetic sensors 25 or the detection signals S2 of the second magnetic sensors 26. In the following description, for simplicity of illustration, the detection signal S(k-1), the detection signal S(k), and the detection signal S(k+1) are respectively assumed to be the detection signal S2a of the second magnetic sensor 26a, the detection signal S1b of the first magnetic sensor 25b, and the detection signal S2c of the second magnetic sensor 26c (see FIG. 3).

The number of counts when the angular velocity calculator 61 performs the counting at the predetermined count interval Tc [ms] during a period from a timing t(k-1) at which the detection signal S(k-1) transitions from low to high to a timing t(k) at which the detection signal S(k) transitions from low to high is defined as n1. Thus, a time T1 [ms] which takes from the timing t(k-1) to the timing t(k) is calculated by Tc×n1. In this case, a rotation speed ω(k) [rad/ms] of the rotor 21 at the timing t(k) is calculated by (Equation 1). In (Equation 1), "θ(k-1)" is the angle of rotation of the rotor 21 at the timing t(k-1), and "θ(k)" is the angle of rotation of the rotor 21 at the timing t(k). Moreover, in (Equation 1), "Pn" is the number of pairs of magnetic poles of a magnet(s) included in the rotor 21, that is, the number of pole pairs of the rotor 21.

[Formula 1]

$$\omega(k) = \frac{\{\theta(k) - \theta(k-1)\}}{T_c \times n_1 \times P_n} \times \frac{2\pi}{360}$$

$$\cdots \text{(Equation 1)}$$

Then, the angular velocity calculator 61 uses the rotation speed $\omega(k)$ of the rotor 21 calculated by (Equation 1) to calculate, by (Equation 2), an angular velocity $d\omega/dt$ of the rotor 21 during a time T2 [ms] from the timing t(k) to a timing t(k+1) at which the detection signal S(k+1) transitions from low to high. Note that it is assumed that the stop controller 52 performs the stop control and the rotation speed of the rotor 21 is thus reduced, and this therefore presupposes that the angular velocity $d\omega/dt$ of the rotor 21 has a negative value.

[Formula 2]

$$-\frac{d\omega}{dt} \sim \frac{\omega(k) - \omega(k+1)}{T_2}$$

$$= \left(\frac{1}{n_1} - \frac{1}{n_2}\right) \times \alpha \times \frac{\theta_{hole}}{T_2}$$

$$\cdots\text{(Equation 2)}$$

In (Equation 2), "n2" is the number of counts when the counting is performed at the predetermined count interval Tc [ms] during the time T2 [ms] from the timing t(k) to the timing t(k+1). Thus, the time T2 is calculated by Tc×n2. Moreover, in (Equation 2), "$\theta_{hole}$" represents the electrical angles of the detection signals S 1 output from each first magnetic sensor 25 and the detection signals S2 output from each second magnetic sensor 26. In the present embodiment, the first magnetic sensors 25 and the second magnetic sensors 26 are arranged such that the "$\theta_{hole}$" is 30°. Note that in (Equation 2), "$\alpha$" is expressed by (Equation 3) below.

[Formula 3]

$$\alpha = \frac{1}{T_c \times P_n} \times \frac{2\pi}{360}$$

$$\cdots\text{(Equation 3)}$$

The angular velocity calculator 61 of the present embodiment calculates the angular velocity of the rotor 21 on the basis of the detection results by the first magnetic sensors 25 and the second magnetic sensors 26 and thus leads to the result that the time T1 which takes from the timing t(k-1) to the timing t(k) is short and the number of counts n1 is thus small as compared with a comparative example in which the angular velocity of the rotor 21 is calculated based on only the detection results by the first magnetic sensors 25. Similarly, the angular velocity calculator 61 of the present embodiment leads to the result that the time T2 which takes from the timing t(k) to the timing t(k+1) is short and the number of counts n2 is small, as compared with the comparative example. Consequently, the angular velocity calculator 61 of the present embodiment leads to the result that the difference between the number of counts n1 and the number of counts n2 is small and the difference between 1/n1 and 1/n2 in (Equation 1) is small as compared with the comparative example. That is, the angular velocity calculator 61 of the present embodiment provides the effects that the angular velocity $d\omega/dt$, having a small value, of the rotor 21 can be obtained and the resolution of the angular velocity $d\omega/dt$ of the rotor 21 is increased, as compared with the comparative example.

The inertial torque calculator 62 calculates, based on the angular velocity of the rotor 21 calculated by the angular velocity calculator 61, the inertial torque value Ti as the inertial force of at least one of the rotor 21 or the transmission mechanism 4. The inertial torque value Ti is the value of torque generated by the inertial force of at least one of the rotor 21 or the transmission mechanism 4. More specifically, the inertial torque value Ti is the value of torque generated at the tip tool 31 by the inertial force of at least one of the rotor 21 or the transmission mechanism 4 after the stop controller 52 starts the stop control.

In the present embodiment, the inertial torque calculator 62 calculates, based on the angular velocity of the rotor 21 calculated by the angular velocity calculator 61, the inertial torque value Ti as the inertial force of the transmission mechanism 4.

The calculation limit of the inertial torque value Ti calculated by the inertial torque calculator 62 will be described below. The "calculation limit of the inertial torque value Ti" as used in the present disclosure is a minimum unit of the inertial torque value Ti which the inertial torque calculator 62 can calculate.

The inertial torque calculator 62 uses (Equation 4) below to calculate the inertial torque value Ti on the basis of the angular velocity dω/dt of the rotor 21 detected by the angular velocity calculator 61. In (Equation 1), "a" is a reduction rate when the transmission mechanism 4 reduces the rotational force of the rotor 21 to transmit the rotational force thus reduced to the output shaft 91. Moreover, in (Equation 4), "Jm" is the value of inertia moment of the rotor 21.

[Formula 4]

$$Ti = a \times Jm \times \left(-\frac{d\omega}{dt}\right) \cdots \text{(Equation 4)}$$

According to (Equation 4), the calculation limit of the inertial torque value Ti decreases as the resolution of the angular velocity dω/dt of the rotor 21 increases. That is, the calculation limit of the inertial torque value Ti decreases when the angular velocity calculator 61 calculates the angular velocity of the rotor 21 on the basis of the detection results by the first magnetic sensors 25 and the second magnetic sensors 26. In other words, the angular velocity calculator 61 calculates the angular velocity of the rotor 21 on the basis of the detection results by the first magnetic sensors 25 and the second magnetic sensors 26, which enables the inertial torque calculator 62 to calculate the inertial torque value Ti which is a small value as compared with the comparative example in which the angular velocity of the rotor 21 is calculated based on only the detection results by the first magnetic sensors 25.

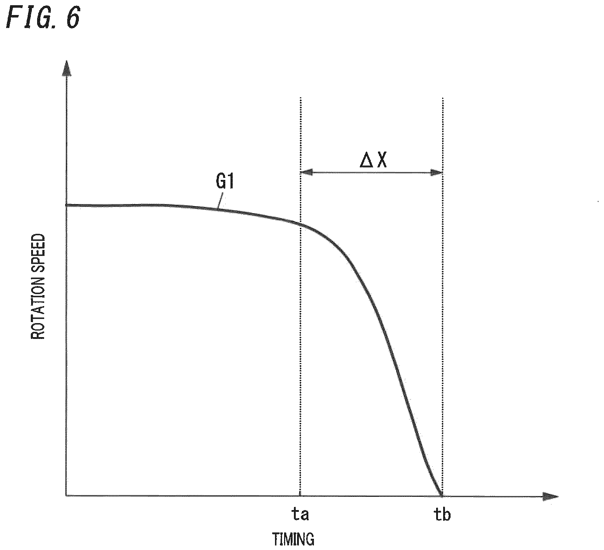

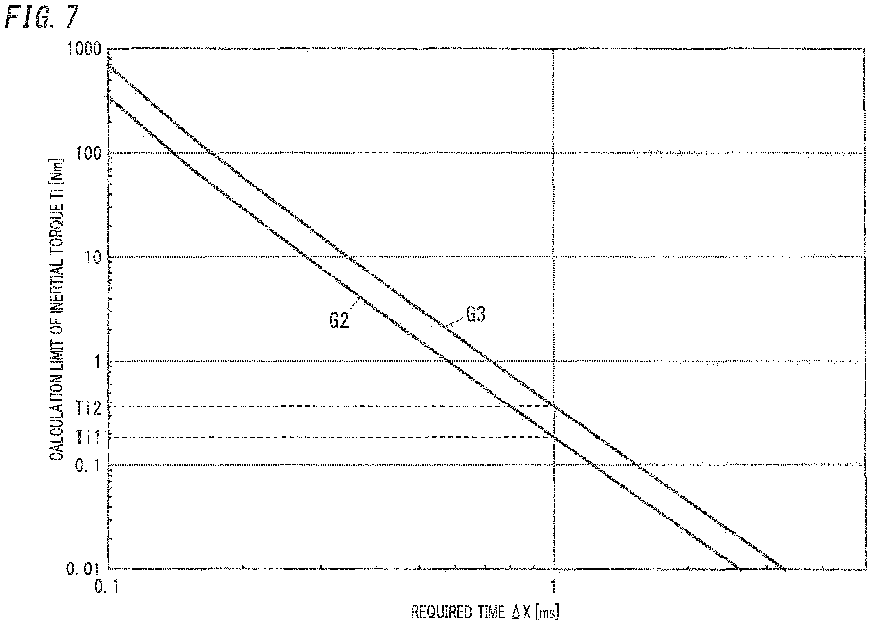

With reference to FIGS. 6 and 7, the calculation limit of the inertial torque value Ti will be described more specifically. A graph G1 in FIG. 6 shows a time rate of change in the rotation speed of the rotor 21 in the case of the content of the tightening task of the electric tool 1 being a hard joint and after the stop controller 52 starts the stop control. In FIG. 6, a timing ta is a timing at which the stop controller 52 starts the stop control, and a timing tb is a timing at which the rotation speed of the rotor 21 reaches 0. In other words, the timing tb is a timing at which the rotor 21 completely stops.

Moreover, a graph G2 in FIG. 7 shows a relationship between the calculation limit of the inertial torque value Ti calculated based on the detection results by the first magnetic sensors 25 and the second magnetic sensors 26 and a required time ΔX (see FIG. 6) which takes from the timing ta at which the stop controller 52 starts the stop control to the timing tb at which the rotation speed of the rotor 21 reaches 0. That is, the graph G2 in FIG. 7 shows the relationship between the calculation limit of the inertial torque value Ti calculated by the inertial torque calculator 62 of the present embodiment and the required time ΔX (see FIG. 6). Further, a graph G3 in FIG. 7 shows, as a comparative example, a relationship between the calculation limit of the inertial torque value Ti calculated based the detection results of only the first magnetic sensors 25 and the required time ΔX.

In general, the required time ΔX in the case of the tightening task being the hard joint is, in many cases, about several ms to several tens ms order. Note that in the following description, a case where the required time ΔX is 1 ms is taken as an example to explain the calculation limit of the inertial torque value Ti at an arbitrary timing during the required time ΔX. In the comparative example, a calculation limit Ti2 of the inertial torque value Ti at an arbitrary timing when the required time ΔX is 1 ms falls within the range from about 0.3 to 0.4 Nm as shown in FIG. 7. In contrast, in the present embodiment, a calculation limit Ti 1 of the inertial torque value Ti at an arbitrary timing when the required time ΔX is 1 ms falls within the range from about 0.1 to 0.2 Nm. In other words, when the required time ΔX is 1 ms, the minimum unit of the inertial torque value Ti which the inertial torque calculator 62 of the present embodiment can calculate at an arbitrary timing is about 0.1 to 0.2 Nm. When the required time ΔX is 1 ms, the calculation limit Ti1 of the inertial torque value Ti of the present embodiment is about a half of the calculation limit Ti2 of the inertial torque value Ti of the comparative example.

In the case of the tightening task being the hard joint, the required time ΔX is, in many cases, about several ms to several tens ms order, and therefore, when the required time ΔX is 1 ms, the calculation limit of the inertial torque value Ti at an arbitrary timing during the required time ΔX is assumed to be maximum. Therefore, in the present embodiment, the calculation limit of the inertial torque value Ti at an arbitrary timing during the required time ΔX is about 0.1 Nm order. In other words, the resolution of the inertial torque value Ti which the inertial torque calculator 62 of the present embodiment can calculate at an arbitrary timing during the required time ΔX is about 0.1 Nm order.

Thus, the inertial torque calculator 62 leads to a small calculation limit of the inertial torque value Ti and can accurately calculate the inertial torque value Ti as compared with the case where the inertial torque value Ti is calculated based on only the detection results by the first magnetic sensors 25. As a result, the electric tool 1 of the present embodiment can accurately calculate the tightening torque value.

(2-8) Storage

The storage 7 stores, as history information, the sum of the motor torque value and the inertial torque value Ti as the tightening torque value. More specifically, the storage 7 stores, as history information, the sum of the motor torque value calculated by the torque detector 51 and the inertial torque value Ti calculated by the inertial torque calculator 62 as the tightening torque value.

The storage 7 is, for example, a storage device such as magnetic core memory or semiconductor memory. Moreover, the storage 7 may be an auxiliary storage device such as a solid state drive (SSD) or a hard disk drive (HDD). There is the advantages that after the tightening task, a user or an administrator of the electric tool 1 can check the tightening torque value because the storage 7 stores the tightening torque value. In other words, there is the advantage that the electric tool 1 has a traceability function of the tightening torque value accurately calculated.

(3) Variations

Variations of the present embodiment will be described below. The variations described below may accordingly be combined with each other.

The number of second magnetic sensors 26 of the present embodiment is equal to the number of phases of the coil 23. However, the number of second magnetic sensors 26 may be greater than the number of phases of the coil 23. That is, the number of second magnetic sensors 26 is at least equal to the number of phases of the coil 23. For example, the number of second magnetic sensors 26 may be six or nine which is a natural multiple of the number of phases of the coil 23.

The electric tool 1 may further include a feedback controller which controls, based on the inertial force of at least one of the rotor 21 or the transmission mechanism 4 computed by the computing unit 6, electric power supplied to the motor 2 in a next tightening task. More specifically, the feedback controller controls, based on a previous inertial torque value Ti calculated by the inertial torque calculator 62, the electric power supplied to the motor 2 such that the motor torque value in the next tightening task decreases by the previous inertial torque value Ti.

The detection results by the second magnetic sensors 26 of the present embodiment are used only to calculate the inertial force by the computing unit 6 but are not used to control the motor 2 by the rotation controller 93 such that the motor 2 continues rotating. However, the detection results by the second magnetic sensors 26 may be used to control the motor 2 by the rotation controller 93 such that the motor 2 continues rotating.

The electric tool 1 is not limited to the impact driver but may be, for example, an impact wrench, a drill screwdriver, a hammer drill, or a jigsaw.

The content of the tightening task of the electric tool 1 may be a soft joint. The soft joint is, for example, a task of tightening a tightening component to a tightening target via a buffer member such as rubber on the tightening target.

The magnet included in the rotor 21 does not have to be the permanent magnet but may be an electromagnet.

(Summary)

An electric tool (1) of a first aspect according to the embodiment includes a motor (2), a holder (3), a transmission mechanism (4), and a motor controller (5). The motor (2) is configured to perform rotation operation. The holder (3) is configured to hold a tip tool (31). The transmission mechanism (4) is configured to transmit rotation of the motor (2) to the holder (3). The motor controller (5) is configured to stop the rotation of the motor (2). The motor (2) includes a rotor (21), a stator (22), a coil (23), and a plurality of magnetic sensors (24). The rotor (21) is configured to be rotatable and includes a magnet. The stator (22) is disposed around the rotor (21). The coil (23) is wound around the stator (22). The plurality of magnetic sensors (24) are configured to detect an angle of rotation of the rotor (21). A number of the plurality of magnetic sensors (24) is greater than a number of phases of the coil (23). The motor controller (5) includes a torque detector (51) and a stop controller (52). The torque detector (51) is configured to detect a motor torque value which is a value of torque transmitted from the motor (2) to the holder (3). The stop controller (52) is configured to perform, based on the motor torque value, stop control of controlling the motor (2) such that the rotation of the motor (2) stops. The electric tool (1) of the first aspect further includes a computing unit (6) configured to compute, based on a detection result by the plurality of magnetic sensors (24), an inertial force of at least one of the rotor (21) or the transmission mechanism (4) after the stop controller (52) starts the stop control.

This aspect provides the advantage that the value of tightening torque actually generated at the tip tool (31) can accurately be calculated.

In an electric tool (1) of a second aspect according to the embodiment and referring to the first aspect, the computing unit (6) includes an angular velocity calculator (61) and an inertial torque calculator (62). The angular velocity calculator (61) is configured to calculate, based on the detection result by the plurality of magnetic sensors (24), an angular velocity of the rotor (21). The inertial torque calculator (62) is configured to calculate, based on the angular velocity of the rotor (21), an inertial torque value (Ti) as the inertial force, the inertial torque value (Ti) being a value of torque generated by the inertial force.

This aspect provides the advantage that the value of the tightening torque actually generated at the tip tool (31) can more accurately be calculated.

An electric tool (1) of a third aspect according to the embodiment and referring to the second aspect further includes a storage (7) configured to store, as a tightening torque value, a sum of the motor torque value and the inertial torque value (Ti).

This aspect provides the advantage that after performing a tightening task, a user or an administrator of the electric tool (1) can check the tightening torque value accurately calculated.

In an electric tool (1) of a fourth aspect according to the embodiment and referring to any one of the first to third aspects, the plurality of magnetic sensors (24) includes: at least one first magnetic sensor (25, 25a, 25b, 25c), a number of the at least one first magnetic sensor (25, 25a, 25b, 25c) being equal to the number of phases of the coil (23); and at least one second magnetic sensor (26: 26a, 26b, 26c) different from the at least one first magnetic sensor (25: 25a, 25b, 25c).

This aspect provides the advantage that the value of tightening torque actually generated at the tip tool (31) can accurately be calculated.

In an electric tool (1) of a fifth aspect according to the embodiment and referring to the fourth aspect, a detection result by the at least one second magnetic sensor (26: 26a, 26b, 26c) is used only to calculate the inertial force by the computing unit (6).

This aspect provides the advantage that the control content of the motor (2) can be simplified.

In an electric tool (1) of a sixth aspect according to the embodiment and referring to the fourth or fifth aspect, a number of the at least one second magnetic sensors (26: 26a, 26b, 26c) is equal to at least the number of phases of the coil (23).

This aspect provides the advantage that the second magnetic sensors (26: 26a, 26b, 26c) can be disposed to correspond to the phases of the coil (23).

**Reference Signs List**

| | |
|---|---|
| 1 | Electric Tool |
| 2 | Motor |
| 21 | Rotor |
| 22 | Stator |
| 23 | Coil |
| 24 | Magnetic Sensor |
| 25, 25a, 25b, 25c | First Magnetic Sensor |
| 26, 26a, 26b, 26c | Second Magnetic Sensor |
| 3 | Holder |
| 31 | Tip Tool |
| 4 | Transmission Mechanism |
| 5 | Motor Controller |
| 51 | Torque Detector |
| 52 | Stop Controller |
| 6 | Computing Unit |
| 61 | Angular Velocity Calculator |
| 62 | Inertial Torque Calculator |

| 7 | Storage |
|---|---|
| Ti | Inertial Torque Value |

**Claims**

1. An electric tool comprising:

   a motor configured to perform rotation operation;
   a holder configured to hold a tip tool;
   a transmission mechanism configured to transmit rotation of the motor to the holder; and
   a motor controller configured to stop the rotation of the motor,
   the motor including

   a rotor configured to be rotatable and including a magnet,
   a stator disposed around the rotor,
   a coil wound around the stator, and
   a plurality of magnetic sensors configured to detect an angle of rotation of the rotor,

   a number of the plurality of magnetic sensors being greater than a number of phases of the coil,
   the motor controller including

   a torque detector configured to detect a motor torque value which is a value of torque transmitted from the motor to the holder and
   a stop controller configured to perform, based on the motor torque value, stop control of controlling the motor such that the rotation of the motor stops,

   the electric tool further comprising a computing unit configured to compute, based on a detection result by the plurality of magnetic sensors, an inertial force of at least one of the rotor or the transmission mechanism after the stop controller starts the stop control.

2. The electric tool of claim 1, wherein
   the computing unit includes

   an angular velocity calculator configured to calculate, based on the detection result by the plurality of magnetic sensors, an angular velocity of the rotor and
   an inertial torque calculator configured to calculate, based on the angular velocity of the rotor, an inertial torque value as the inertial force, the inertial torque value being a value of torque generated by the inertial force.

3. The electric tool of claim 2, further comprising a storage configured to store, as a tightening torque value, a sum of the motor torque value and the inertial torque value.

4. The electric tool of any one of claims 1 to 3, wherein
   the plurality of magnetic sensors includes

   at least one first magnetic sensor, a number of the at least one first magnetic sensor being equal to the number of phases of the coil and
   at least one second magnetic sensor different from the at least one first magnetic sensor.

5. The electric tool of claim 4, wherein
   a detection result by the at least one second magnetic sensor is used only to calculate the inertial force by the computing unit.

6. The electric tool of claim 4 or 5, wherein
   a number of the at least one second magnetic sensor is equal to at least the number of phases of the coil.

*FIG. 1*

FIG. 2

*FIG. 3*

S1a (S1)

S1b (S1)

S1c (S1)

S2a (S2)

S2b (S2)

S2c (S2)

0°          180°

ELECTRICAL ANGLE

FIG. 4

*FIG. 5*

S(k-1)

S(k)

S(k+1)

T1    T2

t(k-1)    t(k)    t(k+1)

θ(k-1)    θ(k)    θ(k+1)

## FIG. 6

FIG. 7

## INTERNATIONAL SEARCH REPORT

| International application No. |
|---|
| **PCT/JP2022/047077** |

### A. CLASSIFICATION OF SUBJECT MATTER

**H02P 6/16**(2016.01)i; **B25B 23/14**(2006.01)i
FI:  H02P6/16; B25B23/14 630B; B25B23/14 610A; B25B23/14 610L

According to International Patent Classification (IPC) or to both national classification and IPC

### B. FIELDS SEARCHED

Minimum documentation searched (classification system followed by classification symbols)

H02P6/16; B25B23/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-066620 A (PANASONIC IP MAN CORP) 13 April 2015 (2015-04-13) paragraphs [0020]-[0068], fig. 1-5 | 1-6 |
| A | JP 03-26431 A (NIPPON MINING CO LTD) 05 February 1991 (1991-02-05) p. 2, lower right column, line 17 to p. 6, upper left column, line 12, fig. 1-3 | 1-6 |
| A | JP 2011-011313 A (HITACHI KOKI CO LTD) 20 January 2011 (2011-01-20) paragraphs [0027]-[0032], fig. 1-2 | 1-6 |
| A | JP 5-328778 A (FUJI ELECTRIC CO LTD) 10 December 1993 (1993-12-10) paragraphs [0001]-[0002] | 1-6 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 February 2023** | **07 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/047077**

| Patent document cited in search report | | | Publication date (day/month/year) | Patent family member(s) | | | Publication date (day/month/year) |
|---|---|---|---|---|---|---|---|
| JP | 2015-066620 | A | 13 April 2015 | US 2015/0021062 A1 paragraphs [0108]-[0158], fig. 8-12c<br>EP 2826596 A2<br>CN 104290067 A | | | |
| JP | 03-26431 | A | 05 February 1991 | (Family: none) | | | |
| JP | 2011-011313 | A | 20 January 2011 | (Family: none) | | | |
| JP | 5-328778 | A | 10 December 1993 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018230140 A1